# EUROPEAN PATENT APPLICATION

(11) **EP 4 654 371 A1**
(43) Date of publication of application: **26.11.2025**
(21) Application number: 24836282.4
(22) Date of filing: 02.07.2024
(51) Int. Cl.: H01M 50/538, H01M 10/04, H01M 50/107, B23K 26/21, B23K 37/04

(54) **CYLINDRICAL SECONDARY BATTERY AND METHOD FOR MANUFACTURING CYLINDRICAL SECONDARY BATTERY**

(30) Priority: 05.07.2023 KR 20230087252
(71) Applicant: LG Energy Solution, Ltd., Seoul 07335 (KR)
(72) Inventor: LEE, Hyuk Soo, Daejeon 34122 (KR); LEE, Won Jae, Daejeon 34122 (KR); SIM, Ah Jin, Daejeon 34122 (KR); PARK, Dong Hyeuk, Daejeon 34122 (KR); PARK, Jung Hyun, Daejeon 34122 (KR); YOON, U Jin, Daejeon 34122 (KR); SEO, Sang Kee, Daejeon 34122 (KR); KIM, Won Joo, Daejeon 34122 (KR); NA, Ki Beom, Daejeon 34122 (KR); KIM, Tae Kyung, Daejeon 34122 (KR); KIM, Kyoung Hak, Daejeon 34122 (KR)
(74) Representative: Goddar, Heinz J.
(86) International application number: PCT/KR2024/009258
(87) International publication number: WO 2025/009834

(57) **Abstract**

The present invention relates to a cylindrical secondary battery and a method for manufacturing the cylindrical secondary battery, and more particularly, to a cylindrical secondary battery, in which precision of a welding process and precision of a welding position are improved when welding a current collector to an electrode assembly, there is no welding defect, a wide area is contacted with lower energy compared to an existing secondary battery, and low resistance is generated to maximize not only welding processibility, and also, resistance heat generated in a current collector is reduced to maximize high performance and high efficiency of the battery, and a method for manufacturing the cylindrical secondary battery.

## Description

### TECHNICAL FIELD

### CROSS-REFERENCE TO RELATED APPLICATION

The present application claims the benefit of the priority of Korean Patent Application No. 10-2023-0087252, filed on July 5, 2023, which is hereby incorporated by reference in its entirety.

### TECHNICAL FIELD

The present invention relates to a cylindrical secondary battery and a method for manufacturing the cylindrical secondary battery, and more particularly, to a cylindrical secondary battery, in which precision of a welding process and precision of a welding position are improved when welding a current collector to an electrode assembly, there is no welding defect, a wide area is contacted with lower energy compared to an existing secondary battery, and low resistance is generated to maximize not only welding processibility, and also, resistance heat generated in a current collector is reduced to maximize high performance and high efficiency of the battery, and a method for manufacturing the cylindrical secondary battery.

### BACKGROUND ART

Secondary batteries are classified into cylindrical and prismatic batteries, in which an electrode assembly is built in a cylindrical or prismatic metal can, and pouch-type batteries, in which an electrode assembly is built in a pouch-type case made of an aluminum laminate sheet, depending on the shapes of the battery cases.

In addition, the electrode assembly built into the battery case may be a power generation element that is chargeable and dischargeable and be classified into a jelly roll-type electrode assembly having a structure in which a separator is interposed between long sheet-shaped positive and negative electrodes coated with an active material and then is wound, a stacked type electrode assembly having a structure in which a plurality of positive and negative electrodes, each of which has a predetermined size, are sequentially stacked with a separator therebetween, and a stack and folding type electrode assembly having a structure in which bicells or full cells are wound by stacking positive and negative electrodes, each of which is provided into a predetermined radical unit, with a separator therebetween are wound.

Among them, the jelly roll-type electrode assembly is widely manufactured because the jelly roll-type electrode assembly is easy to be manufactured and have an advantage of high energy density per weight. The jelly roll-type electrode assembly may be manufactured by assembling a stack, in which long sheet-shaped positive and negative electrodes with a separator therebetween are provided, and winding the stack in a longitudinal direction of the sheet in a state in which a core is in contact with one end of the electrode stack. In addition, the jelly roll-type electrode assembly may be inserted into a battery case provided as a metal can to form the cylindrical secondary battery.

As the cylindrical secondary battery is designed with a high energy density, demands for the cylindrical secondary battery are also increasing.

In the cylindrical secondary batteries, a tabless cell, which is manufactured without a tab, may be a secondary battery with high investment efficiency as it has an energy density five times higher than that of the existing battery. In the case of the manufactured tabless cell, the battery may be manufactured by connecting the jelly roll-type electrode assembly to the current collector, and then connecting the current collector to the can, rather than a method of connecting the existing electrode tab to the can. For this purpose, it may be manufactured by bonding a current collector plate to the jelly roll-type electrode assembly through welding and then inserting the results into the can.

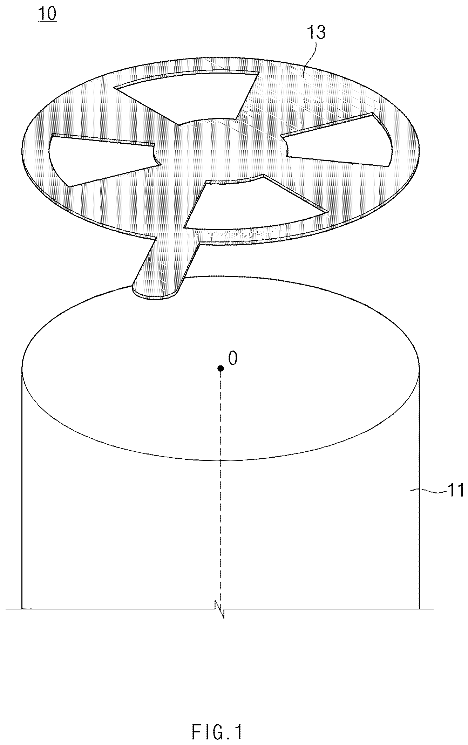

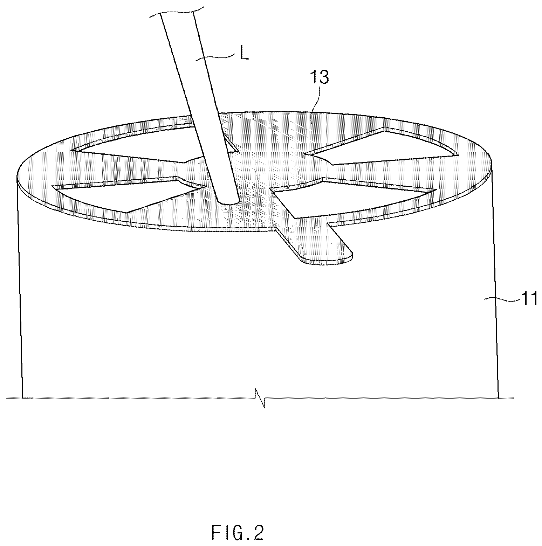

FIG. 1 is a perspective view illustrating a state in which a current collector plate and a jelly roll-type electrode assembly are separated from each other. FIG. 2 is a perspective view illustrating a state in which the current collector plate is bonded to the electrode assembly through welding.

Referring to FIGS. 1 and 2, when manufacturing a conventional cylindrical secondary battery, first, a circular plate-shaped current collector is placed on an upper end of a jelly roll-type electrode assembly (see FIG. 1), and welding laser is irradiated on a top surface of the metal current collector to weld and bond the current collector and the jelly roll-type electrode assembly to each other (see FIG. 2).

However, in the case of the conventional tabless cell, there are various problems in performing high-quality welding when connecting the jelly roll-type electrode assembly to the current collector. The jelly roll-type electrode assembly increases in height from the inside to the outside with respect to a winding center axis O, and as a result, a gap is generated between the current collector and the jelly roll-type electrode assembly. The gap may cause defects during the welding and thus may affect yield of the battery manufacturing process. Particularly, when the welding is performed while the welding laser moves in a radial direction of the current collector on a top surface of the current collector, a degree of welding defects caused by the gap is more severe because the welding is performed along a path having a height difference on the top surface of the jelly roll-type electrode assembly.

In addition, when the welding on the top surface of the metal current collector, dispersion of the welding position occurs depending on a positional tolerance due to equipment tolerance and vibration. Thus, a design is needed, which minimizes an influence of the gap when welding the jelly roll-type electrode assembly and the current collector, and improves precision of the welding process and welding position.

### DISCLOSURE OF THE INVENTION

### TECHNICAL PROBLEM

The present invention has been devised to solve the above problems, and an object of the present invention is to provide a cylindrical secondary battery, in which precision of a welding process and precision of a welding position are improved when welding a current collector to an electrode assembly, there is no welding defect, a wide area is contacted with lower energy compared to an existing secondary battery, and low resistance is generated to maximize not only welding processibility, and also, resistance heat generated in a current collector is reduced to maximize high performance and high efficiency of the battery, and a method for manufacturing the cylindrical secondary battery.

### TECHNICAL SOLUTION

A method for manufacturing a cylindrical secondary battery including a jelly roll-type electrode assembly, in which an electrode and separator are wound, according to the present invention includes a current collector arrangement process of placing a current collector, in which a through-hole is formed, on an end of the jelly roll-type electrode assembly in a direction of a winding center axis, and a current collector welding process of welding and bonding the jelly roll-type electrode assembly to the current collector, wherein, in the current collector welding process, the jelly roll-type electrode assembly and an edge of the current collector through-hole are welded in a circumferential direction.

In the current collector arrangement process, the current collector may be placed on the end of the jelly roll-type electrode assembly so that a position of a curved portion of an end of the electrode provided in the jelly roll-type electrode assembly and a position of a curved portion of the edge of the current collector through-hole correspond to each other.

In the current collector welding process, the electrode provided in the jelly roll-type electrode assembly and the edge of the current collector through-hole may be welded to each other.

In the current collector welding process, the edge of the current collector through-hole, on which the welding is performed, may be an outer edge that is disposed at the outermost side among the edges forming a circumference of the current collector through-hole.

The current collector welding process may be performed by laser welding.

In the current collector welding process, when the jelly roll-type electrode assembly and the edge of the current collector through-hole are laser-welded in the circumferential direction, the welding may be performed while drawing a constant welding pattern.

In the current collector welding process, the welding pattern may include at least one of a zigzag or circular pattern.

The current collector may have a slit-shaped through-hole, and the current collector welding process may include laser-welding the jelly roll-type electrode assembly to an edge of the slit-shaped through-hole.

In the current collector welding process, when the jelly roll-type electrode assembly and the edge of the slit-shaped through-hole are laser-welded in the circumferential direction, the welding may be performed while drawing a constant welding pattern.

In the current collector welding process, the welding pattern may include at least one of a zigzag or circular pattern.

The welding pattern may be the zigzag pattern, and a width (h) of the zigzag pattern may be equal to or greater than 1/2 of a thickness (t) of the current collector.

In the current collector welding process, the edge of the current collector through-hole, which is formed in the circumferential direction, may be detected using a laser scanner having a seam tracking function.

A multipurpose hole may be formed in the current collector to inject an electrolyte or discharge a gas.

The current collector welding process may be performed in a state in which at least one or more of the jelly roll-type electrode assembly and the current collector is fixed using a fixing mechanism.

The fixing mechanism may include: a pressing surface that presses a top surface of the current collector; and a guide surface extending obliquely from a circumference of the pressing surface, wherein a welding hole in which the welding is performed may be formed in the pressing surface at a position corresponding to the edge of the current collector through-hole.

A cylindrical secondary battery according to the present invention includes a jelly roll-type electrode assembly, in which an electrode and separator are wound, and a current collector having a through-hole and bonded by welding on an end of the jelly roll-type electrode assembly in a direction of a winding center axis, wherein the jelly roll-type electrode assembly is welded to an edge of the current collector through-hole in a circumferential direction.

The electrode provided in the jelly roll-type electrode assembly and the edge of the current collector through-hole may be welded to each other.

The welded edge of the current collector through-hole may be an outer edge that is disposed at the outermost side among the edges forming a circumference of the current collector through-hole.

The jelly roll-type electrode assembly and the edge of the current collector through-hole may be bonded by laser welding.

The welding of the jelly roll-type electrode assembly and the edge of the current collector through-hole in the circumferential direction may be performed in a constant welding pattern.

The welding pattern may include at least one of a zigzag or circular pattern.

The current collector may have a slit-shaped through-hole, and the jelly roll-type electrode assembly and an edge of the slit-shaped through-hole may be bonded by laser welding.

The welding of the jelly roll-type electrode assembly and the edge of the slit-shaped through-hole in the circumferential direction may be performed in a constant welding pattern.

The welding pattern may include at least one of a zigzag or circular pattern.

The welding pattern may be the zigzag pattern, and a width (h) of the zigzag pattern may be equal to or greater than 1/2 of a thickness (t) of the current collector.

A multipurpose hole may be formed in the current collector to inject an electrolyte or discharge a gas.

### ADVANTAGEOUS EFFECTS

The present invention relates to the cylindrical secondary battery and the method for manufacturing the cylindrical secondary battery, and thus, the precision of the welding process and the precision of the welding position may be improved when welding the current collector to the electrode assembly, there may be no welding defect, the wide area may be contacted with the lower energy compared to the existing secondary battery, and the low resistance may be generated to maximize not only the welding processibility, and also, the resistance heat generated in the current collector may be reduced to maximize the high performance and high efficiency of the battery.

### BRIEF DESCRIPTION OF THE DRAWINGS

FIG. 1 is a perspective view illustrating a state in which a current collector plate and a jelly roll-type electrode assembly are separated from each other.
FIG. 2 is a perspective view illustrating a state in which the current collector plate is bonded to the electrode assembly through welding.
FIG. 3 is a perspective view illustrating a method for manufacturing a cylindrical secondary battery according to an embodiment of the present invention.
FIG. 4 is a front view in FIG. 3.
FIG. 5 is a perspective view illustrating a current collector and a jelly roll-type electrode assembly of a cylindrical secondary battery according to another embodiment of the present invention.
FIG. 6 is an enlarged perspective view of a slot-shaped through-hole of the current collector illustrated in FIG. 5.
FIG. 7 is a perspective view illustrating a state in which a fixing mechanism is used in the method for manufacturing the cylindrical secondary battery according to an embodiment of the present invention.
FIG. 8 is a perspective view illustrating only the fixing mechanism used in the method for manufacturing the cylindrical secondary battery according to an embodiment of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### An embodiment - Cylindrical secondary battery and method for manufacturing cylindrical secondary battery

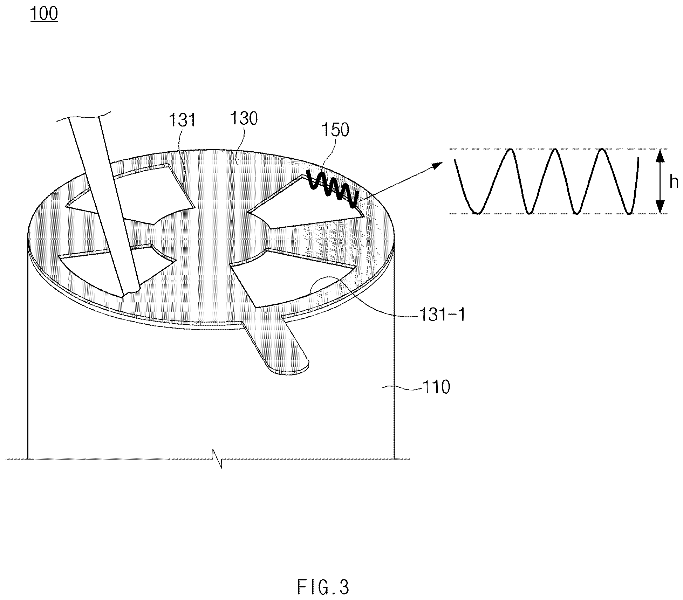

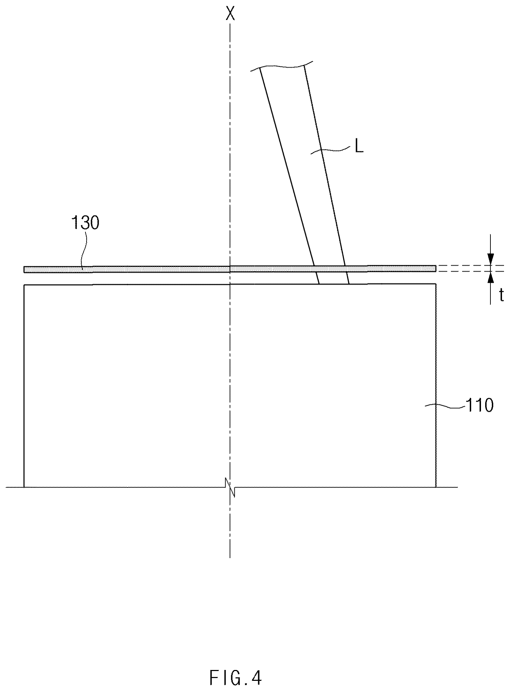

FIG. 3 is a perspective view illustrating a method for manufacturing a cylindrical secondary battery according to an embodiment of the present invention. FIG. 4 is a front view in FIG. 3.

### <Method for manufacturing cylindrical secondary battery>

A method for manufacturing a cylindrical secondary battery 100 according to an embodiment of the present invention relates to a method for manufacturing a cylindrical secondary battery including a jelly roll-type electrode assembly 110 formed by winding an electrode and a separator. The electrode assembly may be formed by alternately disposing a positive electrode, a separator, and a negative electrode. The electrode assembly may be the jelly roll-type electrode assembly 110 in which the electrodes and the separator are alternately disposed to be wound. The jelly roll-type electrode assembly 110 may be an electrode winding body in which one or more positive electrodes, one or more negative electrodes, and one or more separators are wound around each other.

In addition, the method for manufacturing the cylindrical secondary battery according to an embodiment of the present invention may include a current collector arrangement process and a current collector welding process.

The current collector arrangement process may be a process of placing a current collector 130 having a through-hole 131 formed in an end in a direction of a winding center axis X of the jelly roll-type electrode assembly 110. In FIG. 3, a state in which the current collector 130 is placed on an upper end of the jelly roll-type electrode assembly 110 is illustrated. The current collector 130 may have a circular plate shape in which the through-hole 131 is formed. The current collector 130 may be made of a metal.

Referring to FIG. 3, one collector through-hole 131 may have four edges. The one collector through-hole 131 may have two curved edges and two straight edges. The two curved edges formed into a circle may be an inner edge and an outer edge. The two edges formed by the straight line may be two straight edges connecting two ends of each of the inner edge and the outer edge to each other.

In the current collector arrangement process, the current collector 130 may be placed on the end of the jelly roll-type electrode assembly 110 so that a curved portion of the upper end of the electrode included in the jelly roll-type electrode assembly 110 and a curved portion of an edge 131-1 of the current collector through-hole correspond to each other.

The current collector welding process may be a process of bonding the jelly roll-type electrode assembly 110 to the current collector 130 by welding. In particular, the electrode and the current collector 130 in the jelly roll-type electrode assembly 110 may be electrically connected to each other through the welding. Thereafter, the cylindrical secondary battery 100 may be manufactured by accommodating the current collector 130 and the jelly roll-type electrode assembly 110 bonded thereto into a cylindrical can (not shown). The current collector 130 may be electrically connected to a terminal of the cylindrical can by being bonded to the terminal of the cylindrical can. The electrode of the jelly roll-type electrode assembly 110, which is bonded to the current collector 130, may be a positive electrode or a negative electrode.

In the method for manufacturing the cylindrical secondary battery according to an embodiment of the present invention, the current collector welding process may be welding the jelly roll-type electrode assembly 110 and the edge 131-1 of the current collector through-hole in a circumferential direction. The edge 131-1 of the current collector through-hole may be formed in a curved shape corresponding to a shape of the electrode of the circular electrode assembly, and thus, when the welding is performed along the edge 131-1 of the current collector through-hole, the welding may be performed in the circumferential direction.

Specifically, the current collector welding process may be welding the electrode included in the jelly roll-type electrode assembly 110 to the edge 131-1 of the current collector through-hole. Here, the welding may be performed by laser welding. In FIGS. 3 and 4, laser L may be irradiated to the edge of the current collector through-hole to perform the welding.

Due to the above features, the present invention enables the welding without a gap between the current collector 130 and the jelly roll-type electrode assembly 110 to prevent welding defects and performing the welding of the current collector 130 and the jelly roll-type electrode assembly 110 with excellent quality.

A height of the jelly roll-type electrode assembly 110 that is usually wound may increase from the inside to the outside (i.e., in a radial direction) with respect to the winding center axis X, and as a result, a gap may be generated between the current collector 130 and the jelly roll-type electrode assembly 110. According to the related art, when welding a body of the current collector 130 to the electrode assembly, welding defects occurred due to the gap. In addition, the welding is performed on a top surface of the current collector 130 according to the related art, and this method is particularly poor in positional precision of the welding (see FIG. 2).

However, in the method for manufacturing the cylindrical secondary battery according to an embodiment of the present invention, since the welding is performed in the circumferential direction at a position of the edge 131-1 of the current collector through-hole, the positional precision of the welding may be significantly improved.

Furthermore, in the method for manufacturing the cylindrical secondary battery of the present invention, the welding may be performed in a manner in which the edge 131-1 of the current collector through-hole formed in the circumferential direction is detected using a laser scanner including a seam tracking function in the current collector welding process, and in this case, the positional precision of the welding may be further improved.

In addition, the welding may be performed without the gap between the current collector 130 and the electrode assembly along a welding route in the circumferential direction. In addition, the welding with a constant welding depth may be performed. Thus, strong welding coupling may be realized without the welding defects.

In the current collector welding process, the edge 131-1 of the current collector through-hole in which the welding is performed may be an outer edge disposed at the outermost end among the edges forming an inner circumference of the current collector through-hole 131.

Alternatively, when the welding is performed in a circumferential direction, it is possible for both the inner and outer edges of the through-hole, which are formed as curves, among the four edges. However, since the outer edge among the four edges is longer in the circumferential direction, a welding length may be longer at the outer edge. In this case, stronger coupling may be implemented.

In addition, in the current collector welding process of the method for manufacturing the cylindrical secondary battery according to an embodiment of the present invention, when laser-welding the jelly roll-type electrode assembly 110 to the edge 131-1 of the current collector through-hole in the circumferential direction, the welding may be performed while drawing a certain welding pattern 150. The welding pattern 150 may have a zigzag shape or be a circular pattern, or may include at least one of the zigzag shape and the circular pattern.

When performing simple line welding, a melting area of the welding may be narrow. Thus, in order to perform the welding while melting occurs over a wider area to fill the gap over a wider area, the welding may be performed while drawing a predetermined welding pattern such as a zigzag 150 or a circle.

When the welding is performed in the circumferential direction along the edge 131-1 of the current collector through-hole, the melting area of the welding may be narrow to some extent when line welding is performed. However, when the welding is performed while drawing such a pattern, the melting area of the welding may be widened. Thus, welding quality may be improved, and stronger welding may be performed.

In addition, in this case, since a wide area is bonded with lower energy compared to the existing welding, low resistance may be generated to maximize welding processibility, and also, resistance heat generated in the current collector may be reduced to maximize high performance and high efficiency of the battery.

Specifically, referring to FIGS. 3 and 4, the welding pattern 150 may be a zigzag pattern, and a width h of the zigzag pattern may be equal to or greater than 1/2 of a thickness t of the current collector 130. The welding may be performed in this manner to perform more suitable welding in consideration of the thickness of the current collector 130.

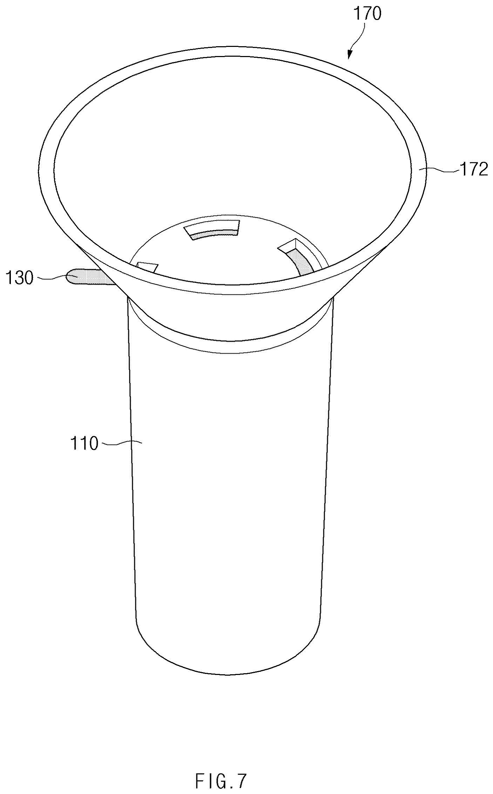

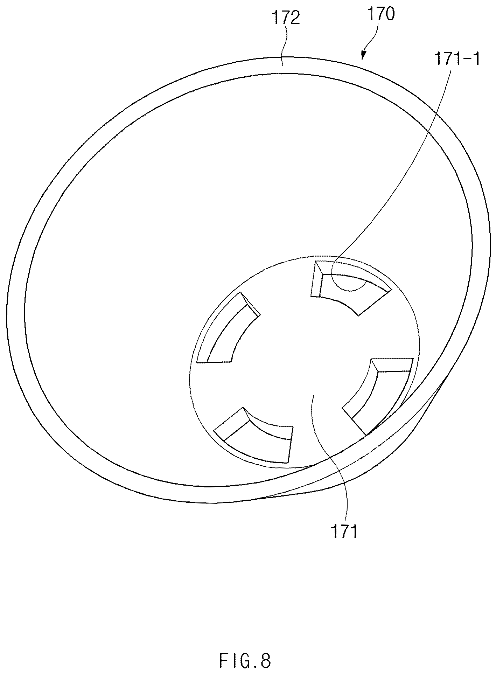

FIG. 7 is a perspective view illustrating a state in which a fixing mechanism 170 is used in the method for manufacturing the cylindrical secondary battery according to an embodiment of the present invention. FIG. 8 is a perspective view illustrating only the fixing mechanism 170 used in the method for manufacturing the cylindrical secondary battery according to an embodiment of the present invention.

Referring to FIGS. 7 and 8, the current collector welding process of the method for manufacturing a cylindrical secondary battery according to an embodiment of the present invention may be performed while fixing at least one of the jelly roll-type electrode assembly 110 and the current collector 130 using the fixing mechanism 170.

In particular, the fixing mechanism 170 may include a pressing surface 171 and a guide surface 172. The pressing surface 171 may have a plate shape and may be configured to press the top surface of the current collector 130. The guide surface 172 may be a portion extending obliquely from a circumference of the pressing surface 171.

A welding hole 171-1 may be formed in the pressing surface 171 at a position corresponding to the edge 131-1 of the current collector through-hole to enable the welding to be performed. Since the welding hole 171-1 is formed in the guide surface 172, the edge 131-1 of the current collector through-hole and the jelly roll-type electrode assembly 110 may be laser-welded stably at an accurate position. The laser L for the welding may pass through the welding hole 171-1 to perform the welding.

### <Cylindrical secondary battery>

When the secondary battery is manufactured according to the method for manufacturing the cylindrical secondary battery according to an embodiment of the present invention, which is described above, the cylindrical secondary battery 100 according to an embodiment of the present invention, which is to be described below, may be manufactured. Hereinafter, when describing the secondary battery according to an embodiment of the present invention, contents duplicated with those that described above in the manufacturing method will be omitted as much as possible, and differences will be described.

Referring to FIGS. 3 and 4, the cylindrical secondary battery 100 according to an embodiment of the present invention may include a jelly roll-type electrode assembly 110 and a current collector 130. The jelly roll-type electrode assembly 110 may be provided by winding an electrode and a separator. The current collector 130 may have a through-hole defined therein and may be configured to be welded to an end in a direction of a winding center axis X of the jelly roll-type electrode assembly 110. In addition, the jelly roll-type electrode assembly 110 is welded in a circumferential direction to an edge 131-1 of the current collector through-hole. The jelly roll-type electrode assembly 110 and the edge 131-1 of the current collector through-hole may be bonded by laser welding.

The cylindrical secondary battery 100 provided in this manner may be welded with a constant welding depth without a gap between the current collector 130 and the jelly roll-type electrode assembly 110. Thus, welded coupling may be realized with excellent quality and strong coupling strength.

Specifically, in the cylindrical secondary battery 100 according to an embodiment of the present invention, an electrode included in the jelly roll-type electrode assembly 110 and the edge 131-1 of the current collector through-hole may be welded to each other.

The welded edge 131-1 of the collector through-hole may be an outer edge disposed at the outermost edge among edges defining a circumference of the current collector through-hole 131. The outer edges may be welded to allow for a longer welding length.

In addition, the laser welding of the jelly roll-type electrode assembly 110 and the edge 131-1 of the current collector through-hole in the circumferential direction may be provided in a constant welding pattern 150. The welding pattern 150 may include at least one of a zigzag or circular pattern. In particular, when the welding pattern 150 is the zigzag pattern, a width h of the zigzag pattern may be equal to or greater than 1/2 of a thickness t of the current collector 130.

Due to the zigzag or circular welding pattern, melting over a larger area may occur to fill the gap over a large area. Thus, the cylindrical battery according to the present invention may be a battery having maximized high performance and high efficiency.

### Another embodiment - Cylindrical secondary battery and method for manufacturing cylindrical secondary battery

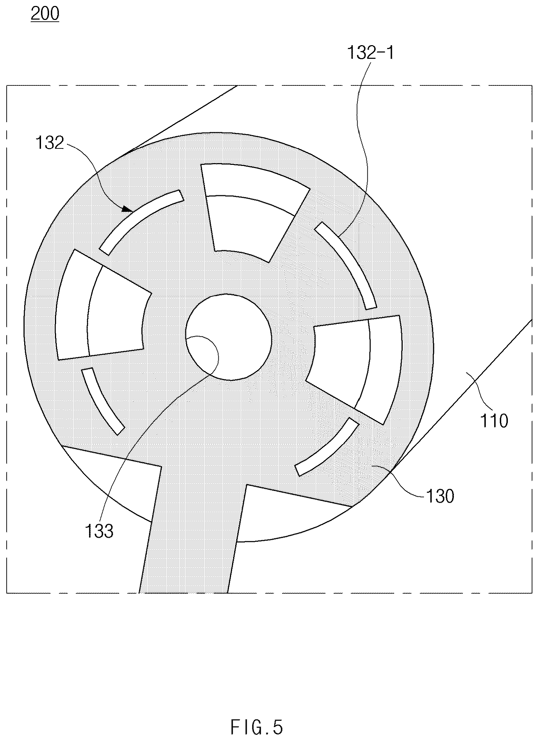

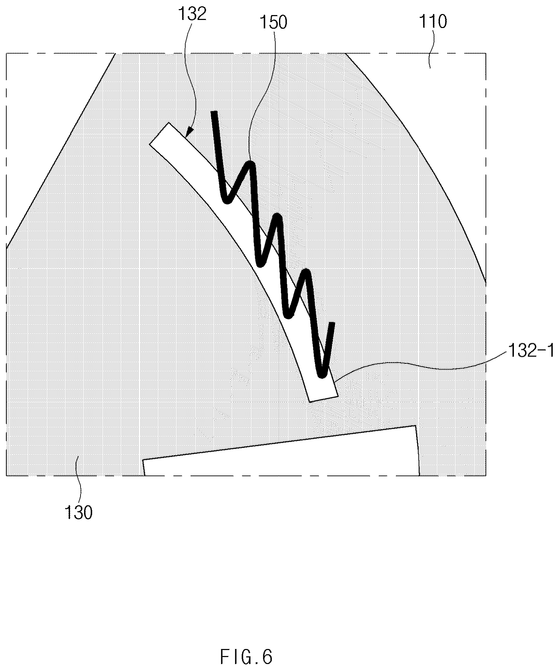

FIG. 5 is a perspective view illustrating a current collector and a jelly roll-type electrode assembly of a cylindrical secondary battery according to another embodiment of the present invention. FIG. 6 is an enlarged perspective view of a slot-shaped through-hole of the current collector illustrated in FIG. 5.

A cylindrical secondary battery and a method for manufacturing the cylindrical secondary battery according to another embodiment of the present invention are different from those according to the foregoing embodiment of the present invention in shape of a current collector.

Contents in common with the foregoing embodiment will be omitted as much as possible, and another embodiment will be described focusing on differences. That is, it is obvious that if the contents that are not described in another embodiment are required, it may be supplemented through the contents according to the forgoing embodiment.

### <Method for manufacturing cylindrical secondary battery>

Referring to FIGS. 5 and 6, a method for manufacturing a cylindrical secondary battery 200 according to another embodiment of the present invention includes a current collector arrangement process and a current collector welding process, similar to the foregoing embodiment. However, the current collector 130 may have a slit-shaped through-hole 132. Thus, the current collector welding process may be laser-welding of a jelly roll-type electrode assembly 110 and an edge 132-1 having the slit-shaped through-hole.

Even if the current collector 130 has the slit-shaped through-hole 132, one current collector through-hole may have four edges. The one collector through-hole 131 may have two curved edges and two straight edges. The current collector through-hole have an inner edge and an outer edge, each of which is formed as a circular curve, and two straight edges connecting the inner edge to the outer edge.

However, when the current collector 130 has the slit-shaped through-hole, lengths of the inner and outer edges, each of which is provided as the curve, may be similar, and the inner and outer edges may be disposed adjacent to each other. Thus, a welding length for welding the inner edge and a welding length for welding the outer edge may be similar during the laser welding. As a result, there may not be a significant difference in weld strength between the two cases of welding the inner and outer edges. This may be advantageous in that it increases in option for which edge to be welded.

Referring to FIG. 6, in the current collector welding process, when laser-welding the jelly roll-type electrode assembly 110 to the edge 132-1 of the slit-shaped through-hole in the circumferential direction, the welding may be performed while drawing a certain welding pattern 150. The welding pattern 150 may include at least one of a zigzag or circular pattern.

In the case in which the current collector 130 has the slit-shaped through-hole, since the inner and outer edges are disposed adjacent to each other, there may also be an advantage in that the inner and outer edges are welded together during the welding while drawing the constant welding pattern 150. In this case, the welding strength may be further improved.

Referring to FIG. 5, a multipurpose hole 133 having a circular shape passing through a central portion of the current collector 130 may be formed. The multipurpose hole 133 may serve to inject an electrolyte or discharge a gas.

### <Cylindrical secondary battery>

When the secondary battery is manufactured according to the method for manufacturing the cylindrical secondary battery according to another embodiment of the present invention, which is described above, the cylindrical secondary battery 200 according to another embodiment of the present invention, which is to be described below, may be manufactured. Hereinafter, when describing the secondary battery according to another embodiment of the present invention, contents duplicated with those that described above in the manufacturing method will be omitted as much as possible, and differences will be described.

Referring to FIG. 5, the cylindrical secondary battery 200 according to another embodiment of the present invention may also include a jelly roll-type electrode assembly 110 and a current collector 130.

However, here, the current collector 130 has a slit-shaped through-hole 132, and the jelly roll-type electrode assembly 110 and an edge 132-1 of the slit-shaped through-hole may be bonded by laser welding. Here, the welding may be performed on the outer curved edge of the edge 132-1 of the slit-shaped through-hole or performed on the inner edge. Alternatively, the welding may be performed on both the inner and outer edges. In this case, weld coupling having excellent quality may be achieved.

Specifically, when the current collector 130 has the slit-shaped through-hole 132, lengths of the inner and outer edges, each of which is provided as the curve, may be similar, and the inner and outer edges may be disposed adjacent to each other. Thus, the weld strength may be similar when the inner edge is welded and when the outer edge is welded. Therefore, even when the inner edge is welded, relatively weak bonding strength may be achieved. In addition, the weld strength may be greater when both the inner and outer edges are welded.

In addition, in the cylindrical secondary battery 200 according to another embodiment of the present invention, the circumferential laser welding of the jelly roll-type electrode assembly 110 and the edge 132-1 of the slit-shaped through-hole may be welded in a constant welding pattern 150. In addition, the welding pattern 150 may include at least one of a zigzag or circular pattern.

In the case in which the current collector 130 has the slit-shaped through-hole 132, since the inner and outer edges are disposed adjacent to each other, the constant welding pattern 150 may be formed over the inner and outer edges together. In this case, the weld strength may significantly increase.

The current collector 130 may have a multipurpose hole 133 having a circular shape passing through a central portion of the current collector 130. The multipurpose hole 133 may serve to inject an electrolyte or discharge a gas.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

100: Cylindrical secondary battery
110: Jelly roll-type electrode assembly
130: Current collector
131: Current collector through-hole
131-1: Edge of current collector through-hole
132: Slit-shaped through-hole
132-1: Edge of slit-shaped through-hole
133: Multipurpose hole
150: Welding pattern
170: Fixing mechanism
171: Pressing surface
172: Guide surface
171-1: Welding hole
L: Laser
X: Winding center axis

## Claims

1. A method for manufacturing a cylindrical secondary battery comprising a jelly roll-type electrode assembly, in which an electrode and separator are wound, the method comprising:
a current collector arrangement process of placing a current collector, in which a through-hole is formed, on an end of the jelly roll-type electrode assembly in a direction of a winding center axis; and
a current collector welding process of welding and bonding the jelly roll-type electrode assembly to the current collector,
wherein, in the current collector welding process, the jelly roll-type electrode assembly and an edge of the current collector through-hole are welded in a circumferential direction.

2. The method of claim 1, wherein, in the current collector arrangement process, the current collector is placed on the end of the jelly roll-type electrode assembly so that a position of a curved portion of an end of the electrode provided in the jelly roll-type electrode assembly and a position of a curved portion of the edge of the current collector through-hole correspond to each other.

3. The method of claim 2, wherein, in the current collector welding process, the electrode provided in the jelly roll-type electrode assembly and the edge of the current collector through-hole are welded to each other.

4. The method of claim 1, wherein, in the current collector welding process, the edge of the current collector through-hole, on which the welding is performed, is an outer edge that is disposed at the outermost side among the edges forming a circumference of the current collector through-hole.

5. The method of claim 1, wherein the current collector welding process is performed by laser welding.

6. The method of claim 5, wherein, in the current collector welding process, when the jelly roll-type electrode assembly and the edge of the current collector through-hole are laser-welded in the circumferential direction, the welding is performed while drawing a constant welding pattern.

7. The method of claim 6, wherein, in the current collector welding process, the welding pattern comprises at least one of a zigzag or circular pattern.

8. The method of claim 1, wherein the current collector has a slit-shaped through-hole, and
the current collector welding process comprises laser-welding the jelly roll-type electrode assembly to an edge of the slit-shaped through-hole.

9. The method of claim 8, wherein, in the current collector welding process, when the jelly roll-type electrode assembly and the edge of the slit-shaped through-hole are laser-welded in the circumferential direction, the welding is performed while drawing a constant welding pattern.

10. The method of claim 9, wherein, in the current collector welding process, the welding pattern comprises at least one of a zigzag or circular pattern.

11. The method of claim 7 or 10, wherein the welding pattern is the zigzag pattern, and
a width (h) of the zigzag pattern is equal to or greater than 1/2 of a thickness (t) of the current collector.

12. The method of claim 1, wherein, in the current collector welding process, the edge of the current collector through-hole, which is formed in the circumferential direction, is detected using a laser scanner having a seam tracking function.

13. The method of claim 1, wherein a multipurpose hole is formed in the current collector to inject an electrolyte or discharge a gas.

14. The method of claim 1, wherein the current collector welding process is performed in a state in which at least one or more of the jelly roll-type electrode assembly and the current collector is fixed using a fixing mechanism.

15. The method of claim 14, wherein the fixing mechanism comprises:
a pressing surface that presses a top surface of the current collector; and
a guide surface extending obliquely from a circumference of the pressing surface,
wherein a welding hole in which the welding is performed is formed in the pressing surface at a position corresponding to the edge of the current collector through-hole.

16. A cylindrical secondary battery comprising:
a jelly roll-type electrode assembly, in which an electrode and separator are wound; and
a current collector having a through-hole and bonded by welding on an end of the jelly roll-type electrode assembly in a direction of a winding center axis,
wherein the jelly roll-type electrode assembly is welded to an edge of the current collector through-hole in a circumferential direction.

17. The cylindrical secondary battery of claim 16, wherein the electrode provided in the jelly roll-type electrode assembly and the edge of the current collector through-hole are welded to each other.

18. The cylindrical secondary battery of claim 16, wherein the welded edge of the current collector through-hole is an outer edge that is disposed at the outermost side among the edges forming a circumference of the current collector through-hole.

19. The cylindrical secondary battery of claim 16, wherein the jelly roll-type electrode assembly and the edge of the current collector through-hole are bonded by laser welding.

20. The cylindrical secondary battery of claim 19, wherein the welding of the jelly roll-type electrode assembly and the edge of the current collector through-hole in the circumferential direction is performed in a constant welding pattern.

21. The cylindrical secondary battery of claim 20, wherein the welding pattern comprises at least one of a zigzag or circular pattern.

22. The cylindrical secondary battery of claim 16, wherein the current collector has a slit-shaped through-hole, and
the jelly roll-type electrode assembly and an edge of the slit-shaped through-hole are bonded by laser welding.

23. The cylindrical secondary battery of claim 22, wherein the welding of the jelly roll-type electrode assembly and the edge of the slit-shaped through-hole in the circumferential direction is performed in a constant welding pattern.

24. The cylindrical secondary battery of claim 23, wherein the welding pattern comprises at least one of a zigzag or circular pattern.

25. The cylindrical secondary battery of claim 21 or 24, wherein the welding pattern is the zigzag pattern, and
a width (h) of the zigzag pattern is equal to or greater than 1/2 of a thickness (t) of the current collector.

26. The cylindrical secondary battery of claim 16, wherein a multipurpose hole is defined in the current collector to inject an electrolyte or discharge a gas.
